# EUROPEAN PATENT APPLICATION

(11) **EP 4 692 616 A1**
(43) Date of publication of application: **11.02.2026**
(21) Application number: 24779166.8
(22) Date of filing: 05.03.2024
(51) Int. Cl.: F16K 31/06

(54) **VALVE DEVICE**

(30) Priority: 31.03.2023 JP 2023058479
(71) Applicant: KAWASAKI JUKOGYO KABUSHIKI KAISHA, Kobe-shi, Hyogo 650-8670 (JP); TOYOTA JIDOSHA KABUSHIKI KAISHA, Toyota-shi Aichi 471-8571 (JP)
(72) Inventor: OKAMOTO, Masayoshi, Hyogo 6508670 (JP); NINOMIYA, Makoto, Hyogo 6508670 (JP); HAYASE, Tomoya, Hyogo 6508670 (JP); KAMIYA, Toshihiko, Aichi-ken 471-8571 (JP); KANEKO, Naoto, Aichi-ken 471-8571 (JP)
(74) Representative: EIP
(86) International application number: PCT/JP2024/008276
(87) International publication number: WO 2024/203028

(57) **Abstract**

This valve device includes: a housing including a first valve chamber including a first valve port, a second valve chamber including a second valve port, a valve passage connecting the first valve port and the second valve port, and a valve seat around the second valve port; an electromagnetic valve including a first valve body housed in the first valve chamber and configured to open and close the first valve port, and a solenoid that moves the first valve body by an electromagnetic force; and a backflow throttle valve including a second valve body housed in the second valve chamber and configured to be seated on and unseated from the valve seat. When pushed by gas in the valve passage, the second valve body of the backflow throttle valve is unseated from the valve seat, and when pushed by gas in the second valve chamber, the second valve body of the backflow throttle valve is seated on the valve seat to throttle gas flow from the second valve chamber to the valve passage.

## Description

### Technical Field

The present disclosure relates to a valve device that controls the flow of gas.

### Background Art

Examples of the known valve device include an electromagnetic valve such as that disclosed in Patent Literature (PTL) 1. The electromagnetic valve disclosed in PTL 1 can control the flow of gas.

### Citation List

### Patent Literature

PTL 1: Japanese Laid-Open Patent Application Publication No. 2015-48916

### Summary of Invention

### Technical Problem

In an environment where the electromagnetic valve disclosed in PTL 1 is used, the flowing gas may contain foreign matter such as moisture, for example. Such foreign matter can affect the opening/closing operation, the controllability, etc., of the electromagnetic valve.

Thus, an object of the present disclosure is to provide a valve device capable of impeding the ingress of foreign matter into an electromagnetic valve.

### Solution to Problem

A valve device according to the first disclosure includes: a housing including a first valve chamber including a first valve port, a second valve chamber including a second valve port, a valve passage connecting the first valve port and the second valve port, and a valve seat around the second valve port; an electromagnetic valve including a first valve body housed in the first valve chamber and configured to open and close the first valve port, and a solenoid that moves the first valve body by an electromagnetic force; and a backflow throttle valve including a second valve body housed in the second valve chamber and configured to be seated on and unseated from the valve seat. When pushed by gas in the valve passage, the second valve body of the backflow throttle valve is unseated from the valve seat, and when pushed by gas in the second valve chamber, the second valve body of the backflow throttle valve is seated on the valve seat to throttle gas flow from the second valve chamber to the valve passage.

According to the first disclosure, by positioning the backflow throttle valve in the second valve port, it is possible to ensure that the gas flows from the electromagnetic valve to the backflow throttle valve via the valve passage at a sufficient flow rate. Meanwhile, it is possible to reduce the flow rate of the gas flowing from the backflow throttle valve to the electromagnetic valve via the valve passage. Thus, if the gas flowing to the electromagnetic valve via the valve passage contains foreign matter, it is possible to reduce the occurrence of a large amount of foreign matter reaching the electromagnetic valve.

A valve device according to the second disclosure includes: a housing including a housing body including a valve insertion hole, and a seat element housed in the valve insertion hole and including a valve passage connecting a first valve port and a second valve port; a first valve housed in the valve insertion hole and configured to open and close the first valve port by being seated on and unseated from the seat element; and a second valve housed in the valve insertion hole and configured to open and close the second valve port by being seated on and unseated from the seat element. The first valve is an electromagnetic valve. The second valve is a backflow throttle valve, a check valve, or an excess flow valve.

According to the second disclosure, by positioning the backflow throttle valve in the second valve port, it is possible to ensure that the gas flows from the electromagnetic valve to the backflow throttle valve via the valve passage at a sufficient flow rate. Meanwhile, it is possible to reduce the flow rate of the gas flowing from the backflow throttle valve to the electromagnetic valve via the valve passage. Thus, if the gas flowing to the electromagnetic valve via the valve passage contains foreign matter, it is possible to reduce the occurrence of a large amount of foreign matter reaching the electromagnetic valve.

A valve device according to the third disclosure includes: a housing including a first valve chamber including a first valve port, a second valve chamber including a second valve port, and a valve passage connecting the first valve port and the second valve port; an electromagnetic valve including a first valve body housed in the first valve chamber and configured to open and close the first valve port, and a solenoid that moves the first valve body by an electromagnetic force; and a springless valve including a second valve body movably housed in the second valve chamber and configured to open and close the second valve port. The second valve body receives a gas pressure of the valve passage and a gas pressure of the second valve chamber in opposite directions and is configured to open and close the second valve port according to a pressure difference between the gas pressure of the valve passage and the gas pressure of the second valve chamber.

According to the third disclosure, it is possible to move the second valve body according to the pressure difference between the gas pressure of the valve passage and the gas pressure of the second valve chamber. Therefore, after the electromagnetic valve opens the first valve port and causes the gas to flow from the valve passage into the inflow/outflow passage, the second valve port can be left open. As a result, the occurrence of chatter at the springless valve can be reduced. When the gas tends to flow from the second valve chamber to the valve passage via the second valve port, the second valve port can be closed. Therefore, the foreign matter flowing from the second valve chamber to the valve passage via the second valve port together with the gas can be impeded from reaching the electromagnetic valve.

### Advantageous Effects of Invention

According to the first to third disclosures, it is possible to impede the ingress of foreign matter into an electromagnetic valve.

The above object, other objects, features, and advantages of the present disclosure will be made clear by the following detailed explanation of preferred embodiments with reference to the attached drawings.

### Brief Description of Drawings

Fig. 1 is a cross-sectional view illustrating a valve device according to the present disclosure.
Fig. 2 is an enlarged cross-sectional view of a portion of the valve device of Fig. 1.
Fig. 3 is a perspective view illustrating a second valve body of the backflow throttle valve of Fig. 2.
Fig. 4 is a bottom view of the second valve body of Fig. 3 viewed from the front of the figure.
Fig. 5 is an enlarged cross-sectional view of the second valve body of Fig. 2.
Fig. 6 is an enlarged cross-sectional view of a portion of a valve device according to another embodiment of the present disclosure.

### Description of Embodiments

Hereinafter, a valve device 1 according to an embodiment of the present disclosure will be described with reference to the aforementioned drawings. Note that the concept of directions mentioned in the following description is used for the sake of explanation; the orientations, etc., of elements according to the present disclosure are not limited to these directions. The valve device 1 described below is merely one embodiment of the present disclosure. Thus, the present disclosure is not limited to the embodiment and may be subject to addition, deletion, and alteration within the scope of the essence of the present disclosure.

### <Valve Device>

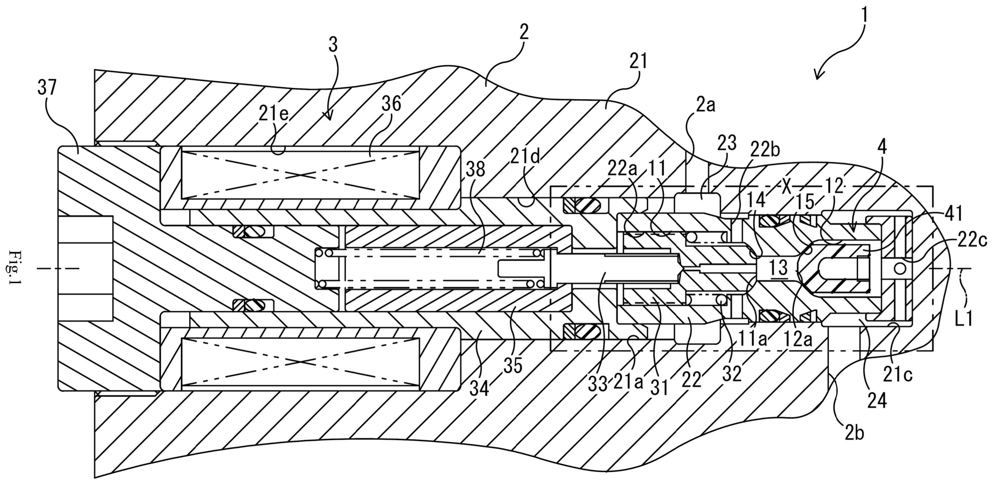

The valve device 1 according to Embodiment 1 illustrated in Fig. 1 controls the flow of gas. The gas to be controlled is hydrogen gas in the present embodiment. Note that the gas is not limited to hydrogen and may be other gases such as helium, nitrogen, and natural gas. The valve device 1 is interposed in a flow path in which the gas flows. The valve device 1 is provided in a tank valve on a pressure vessel to be filled with gas, for example. The valve device 1 controls the inflow and outflow of the gas that is stored in a high-pressure tank. The valve device 1, which is an electromagnetic valve device with a backflow throttle valve, includes a housing 2, an electromagnetic valve 3, and a backflow throttle valve 4.

### <Housing>

The housing includes a first valve chamber 11, a second valve chamber 12, a valve passage 13, a first valve seat 14, and a second valve seat 15. Furthermore, the housing 2 includes a housing body 21 and a seat element 22. The housing 2 includes a first flow path portion 2a and a second flow path portion 2b that constitute the aforementioned flow path. The first flow path portion 2a is connected to a high-pressure tank (not illustrated in the drawings), for example. The second flow path portion 2b is connected to the inlet/outlet of the tank valve, for example.

The first valve chamber 11 includes a first valve port 11a. The first valve chamber 11 is connected to the first flow path portion 2a. The second valve chamber 12 includes a second valve port 12a. The second valve chamber 12 is connected to the second flow path portion 2b. The valve passage 13 connects the first valve port 11a and the second valve port 12a. The first valve seat 14 is formed around the first valve port 11a. The second valve seat 15 is formed around the second valve port 12a. The second valve seat 15 is reduced in diameter toward the second valve port 12a. In other words, the second valve seat 15 is formed having a tapered shape.

### <Housing Body>

The housing body 21 includes a valve insertion hole 21a, said first flow path portion 2a, and said second flow path portion 2b. The valve insertion hole 21a is a closed-bottom hole extending along a predetermined axis L1. The valve insertion hole 21a includes a large-diameter portion 21c, a medium-diameter portion 21d, and a small-diameter portion 21c in the order from one side in an axial direction in which the axis L1 extends. The first flow part portion 2a is connected to the medium-diameter portion 21d. Note that the valve insertion hole 21a does not necessarily need to be a closed-bottom hole. The second flow part portion 2b is connected to the small-diameter portion 21c.

### <Seat Element>

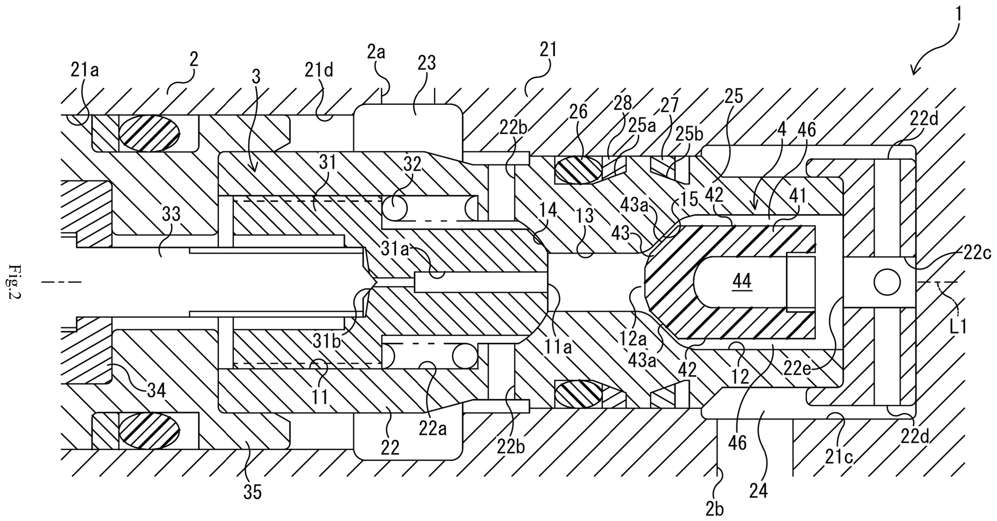

As illustrated in Fig. 2, the seat element 22 is housed in the valve insertion hole 21a. More specifically, the seat element 22 is inserted in the valve insertion hole 21a so that the axis of the seat element 22 matches the axis L1. An end of the seat element 22 that is located on the other side in the axial direction abuts the bottom of the valve insertion hole 21a. The seat element 22 is disposed extending from the small-diameter portion 21c to the medium-diameter portion 21d. The seat element 22 is hermetically inserted in the valve insertion hole 21a. As a result, together with the housing body 21, the seat element 22 forms first and second annular spaces 23, 24 therebetween in the medium-diameter portion 21d and the small-diameter portion 21c.

Furthermore, the seat element 22 includes the first valve chamber 11, the second valve chamber 12, the valve passage 13, the first valve seat 14, and the second valve seat 15. The seat element 22 includes an inner hole 22a extending in the axial direction; in the present embodiment, the seat element 22 is in the shape of a closed-bottom circular cylinder. The inner hole 22a includes the first valve chamber 11, the second valve chamber 12, and the valve passage 13. The first valve chamber 11 is located on the one side in the axial direction in the inner hole 22a. The first valve chamber 11 is open outward on the one side in the axial direction. The first valve chamber 11 includes the first valve port 11a on the other side in the axial direction. The second valve chamber 12 is located on the other side in the axial direction in the inner hole 22a. The second valve chamber 12 includes the second valve port 12a on the one side in the axial direction. In the inner hole 22a, the valve passage 13 is located between the first valve chamber 11 and the second valve chamber 12. The valve passage 13 connects the first valve port 11a and the second valve port 12a. The first valve chamber 11 and the second valve chamber 12 are dimensioned to have a greater diameter than the valve passage 13. The first valve seat 14 is formed around the first valve port 11a, and the second valve seat 15 is formed around the second valve port 12a.

Furthermore, the seat element 22 includes a communication path 22b and an inflow/outflow passage 22c. The communication path 22b is formed on the seat element 22, at a position corresponding to the first valve chamber 11. In the present embodiment, four communication paths 22b are formed on the seat element 22. The communication paths 22b connect the first valve chamber 11 and the first flow path portion 2a via the first annular space 23. In the seat element 22, the inflow/outflow passage 22c is located on the other side of the second valve chamber 12 in the axial direction. In the present embodiment, the inflow/outflow passage 22c is formed at the bottom of the seat element 22. The inflow/outflow passage 22c includes a plurality of outlets/inlets 22d and an inlet/outlet 22e. The plurality of outlets/inlets 22d are open to the second annular space 24. The inlet/outlet 22e is open to the second valve chamber 12 and is disposed concentrically with the axis L1. The inflow/outflow passage 22c connects the second valve chamber 12 and the second flow path portion 2b via the second annular space 24.

Furthermore, the seat element 22 includes a seat element body 25, a sealing member 26, and a throttle member 27. The seat element body 25 includes the first valve chamber 11, the second valve chamber 12, the valve passage 13, the first valve seat 14, and the second valve seat 15 described above. The seat element body 25 includes a seal groove 25a and a housing groove 25b. The seal groove 25a extends around the entire perimeter of the outer peripheral surface of the seat element body 25. The housing groove 25b also extends around the entire perimeter of the outer peripheral surface of the seat element body 25. The housing groove 25b is located on the other side of the seal groove 25a in the axial direction.

The sealing member 26 is disposed in the seal groove 25a. The sealing member 26 disposed in the seal groove 25a is in abutment with the inner peripheral surface of the valve insertion hole 21a. The sealing member 26 provides a seal between the seat element body 25 and the housing body 21. As a result, a seal is provided between the first annular space 23 and the second annular space 24. The sealing member 26 is an O-ring in the present embodiment. A back-up ring 28 is disposed in the seal groove 25a. In the seal groove 25a, the back-up ring 28 is located on the other side of the sealing member 26 in the axial direction. The back-up ring 28 prevents the sealing member 26 from moving to the other side in the axial direction.

The throttle member 27 is provided on the exterior of the seat element body 25. The throttle member 27 is positioned on the other side of the seal groove 25a in the axial direction and is disposed between the seat element body 25 and the housing body 21. More specifically, the throttle member 27 is housed in the housing groove 25b. The throttle member 27 reduces the flow rate of gas passing between the seat element body 25 and the housing body 21. In the present embodiment, the throttle member 27 is a back-up ring. Note that the throttle member 27 is not limited to the back-up ring. It is sufficient that the throttle member 27 be capable of reducing the flow rate of gas passing between the seat element body 25 and the housing body 21.

### <Electromagnetic Valve>

The electromagnetic valve 3, which is an example of the first valve, includes a first valve body 31, a first spring member 32, a pilot valve body 33, a plunger 34, a guiding member 35, a solenoid 36, a stationary pole 37, and a second spring member 38 As illustrated in Fig. 1, the electromagnetic valve 3 is housed in the valve insertion hole 21a. More specifically, the electromagnetic valve 3 is disposed on the one side of the valve passage 13 in the axial direction in the valve insertion hole 21a. With an electromagnetic force, the electromagnetic valve 3 is seated on and unseated from the seat element 22. Thus, the electromagnetic valve 3 opens and closes the first valve port 11a. The electromagnetic valve 3 is an electromagnetic pilot valve. When the gas flows in the valve passage 13 from the second valve port 12a to the first valve port 11a, the electromagnetic valve 3 opens the first valve port 11a and blocks the opposite flow.

### <First Valve Body>

As illustrated in Fig. 2, the first valve body 31 is housed in the first valve chamber 11. The first valve body 31 moves in the first valve chamber 11. The first valve body 31 moves to be seated on and unseated from the seat element 22. More specifically, the first valve body 31 is seated on the first valve seat 14. When the first valve body 31 is seated on the first valve seat 14, the first valve port 11a is closed. Furthermore, the first spring member 32 is provided on the exterior of the first valve body 31. The first valve body 31 is biased by the first spring member 32, thereby being unseated from the first valve seat 14. When the first valve body 31 is unseated from the first valve seat 14, the first valve port 11a is opened.

Furthermore, the first valve body 31 includes an inner passage 31a. The inner passage 31a extends through the first valve body 31. The inner passage 31a remains connected to the valve passage 13 on the one side in the axial direction irrespective of the open/closed state of the first valve port 11a. A pilot valve body valve seat 31b is formed on a portion of the inner passage 31a that is located in the middle in the axial direction.

### <Pilot Valve Body>

The pilot valve body 33 opens and closes the inner passage 31a of the first valve body 31. More specifically, the pilot valve body 33 is slidably inserted in the inner passage 31a of the first valve body 31. Furthermore, the pilot valve body 33 is biased by the second spring member 38. The pilot valve body 33 is biased to be seated on the pilot valve body valve seat 31b of the first valve body 31. As a result, the inner passage 31a is closed. The second spring member 38 biases the first valve body 31 via the pilot valve body 33, thereby pressing the first valve body 31 against the first valve seat 14. As a result, the first valve port 11a is closed.

### <Plunger>

The plunger 34 is a cylindrical member made from a magnetic material. The plunger 34 is inserted in the valve insertion hole 21 so that the plunger 34 is movable in the axial direction. Furthermore, the pilot valve body 33 is inserted through the plunger 34, and the pilot valve body 33 is in engagement with the plunger 34. Therefore, when the plunger 34 moves to the one side in the axial direction, the pilot valve body 33 is lifted up. This makes it possible to cause the pilot valve body 33 to disengage from the pilot valve body valve seat 31b.

### <Guiding Member>

The guiding member 35 is a cylindrical member made of metal. The guiding member 35 is inserted in the valve insertion hole 21a. The pilot valve body 33 and the plunger 34 are inserted through the guiding member 35. The guiding member 35 slidably guides the plunger 34 in the axial direction. The guiding member 35 is in abutment with an end of the seat element 22 that is located on the one side in the axial direction. Together with the bottom of the valve insertion hole 21a, the guiding member 35 holds the seat element 22 therebetween.

### <Solenoid and Stationary Pole>

With an electromagnetic force, the solenoid 36 moves the first valve body 31. The solenoid 36 is housed in the housing 2. More specifically, the solenoid 36 is inserted in the valve insertion hole 21a and is provided on the exterior of the guiding member 35. When energized, the solenoid 36 produces a magnetic field. The stationary pole 37 is provided on the housing body 21 to close the opening of the valve insertion hole 21a. Together with the housing body 21, the stationary pole 37 holds the solenoid 36 therebetween. The stationary pole 37 has a leading end portion inserted in the guiding member 35. In cooperation with the solenoid 36, the stationary pole 37 produces an excitation force. With this, the plunger 34 moves to the one side in the axial direction, and the pilot valve body 33 moves to the one side in the axial direction accordingly. Therefore, the inner passage 31a is opened. As a result, the pressure difference between the valve passage 13 and the first valve chamber 11 is reduced and thus, the first spring member 32 causes the first valve body 31 to disengage from the first valve seat 14. Accordingly, the first valve port 11a is opened.

### <Backflow Throttle Valve>

The backflow throttle valve 4, which is an example of the second valve, includes a second valve body 41. As illustrated in Fig. 2, the backflow throttle valve 4 is housed in the valve insertion hole 21a. More specifically, the backflow throttle valve 4 is disposed on the other side of the valve passage 13 in the axial direction in the valve insertion hole 21a. The backflow throttle valve 4 is seated on and unseated from the seat element 22. Thus, the backflow throttle valve 4 opens and closes the second valve port 12a. The backflow throttle valve 4 allows the flow from the valve passage 13 to the second valve chamber 12, and reduces the flow rate of gas flowing from the second valve chamber 12 to the valve passage 13. Furthermore, the backflow throttle valve 4 is a springless valve in the present embodiment. This means that the backflow throttle valve 4 includes no springs and is actuated according to the pressure difference between the gas pressure of the valve passage 13 and the gas pressure of the second valve chamber 12 that oppose each other. Note that the backflow throttle valve 4 is not necessarily limited to a springless valve.

### <Second Valve Body>

The second valve body 41 is slidably housed in the housing 2. More specifically, the second valve body 41 is slidably housed in the second valve chamber 12 of the seat element 22. The second valve body 41 moves to be seated on and unseated from the second valve seat 15. Thus, the second valve port 12a is opened and closed using the second valve body 41.

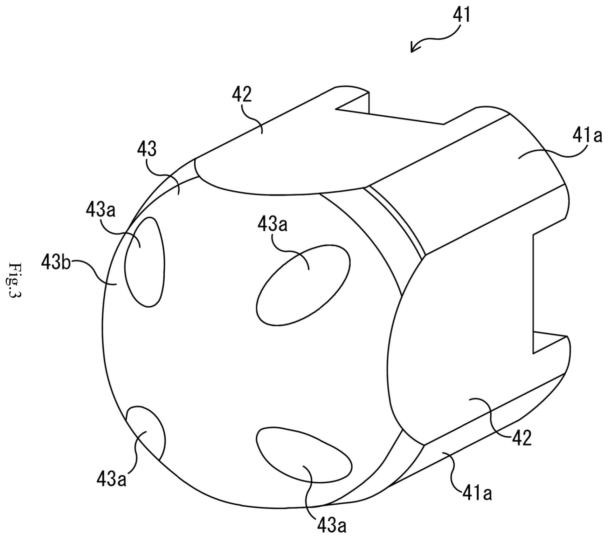

Furthermore, the second valve body 41 is under the gas pressure of the valve passage 13 and the gas pressure of the second valve chamber 12 that oppose each other. In the present embodiment, the second valve body 41 is not biased by a spring and moves according to the pressure difference between the gas pressure of the valve passage 13 and the gas pressure of the second valve chamber 12 that oppose each other. When pushed by the gas in the valve passage 13, the second valve body 41 is unseated from the second valve seat 15. As a result, the second valve port 12a is opened and thus, the gas flows from the valve passage 13 to the second valve chamber 12. When pushed by the gas in the second valve chamber 12, the second valve body 41 is seated on the second valve seat 15. As a result, the second valve port 12a is closed. In the present embodiment, the second valve body 41, when seated, closes the second valve port 12a, and allows throttled gas flow from the second valve chamber 12 to the valve passage 13. The second valve body 41 is formed in the shape of a closed-bottom cylinder, for example. The second valve body 41 includes a plurality of cutouts 42, a seating part 43, and a capturing hole 44, as illustrated in Fig. 3 to Fig. 5.

The plurality of cutouts 42 are located on the outer peripheral surface of the second valve body 41. In the present embodiment, the second valve body 41 includes four cutouts 42 on the outer peripheral surface. The four cutouts 42 are arranged at regular intervals on the outer peripheral surface of the second valve body 41. Specifically, the four cutouts 42 are arranged at 90-degree intervals on the outer peripheral surface of the second valve body 41. Furthermore, the cutout 42 forms a flow path 46 between the outer peripheral surface of the second valve body 41 and the housing 2. More specifically, on the outer peripheral surface of the second valve body 41, each of the cutouts 42 forms a flat face that is perpendicular to the radial direction. As a result, the second valve body 41 is formed in the shape of a square with rounded corners in a cross section perpendicular to the axis of the second valve body 41 (that matches the axis L1 in the present embodiment). Therefore, with the cutouts 42, the four flow paths 46 are formed between the outer peripheral surface of the second valve body 41 and the housing 2, and the second valve body 41 is supported on the housing 2 (more specifically, the second valve chamber 12) at rounded corners 41a so that the second valve body 41 is slidable in the axial direction.

The seating part 43 is seated on the second valve seat 15, as illustrated in Fig. 2. The seating part 43 is positioned, for example, at a leading end portion of the second valve body 41, as illustrated in Figs. 3 to 5. The seating part 43 is disposed facing the second valve seat 15 (refer to Fig. 2). Therefore, when pushed by the gas in the second valve chamber 12, the seating part 43 is seated on the second valve seat 15. In the present embodiment, the seating part 43 is formed in the shape of a partial sphere. Furthermore, the seating part 43 includes a plurality of slits 43a, as illustrated in Figs. 3 to 5.

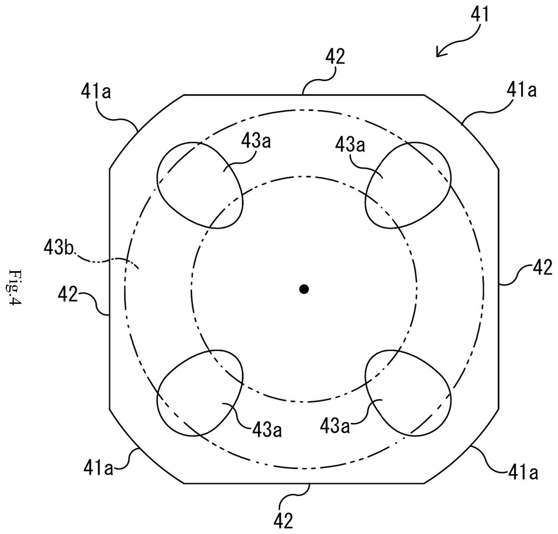

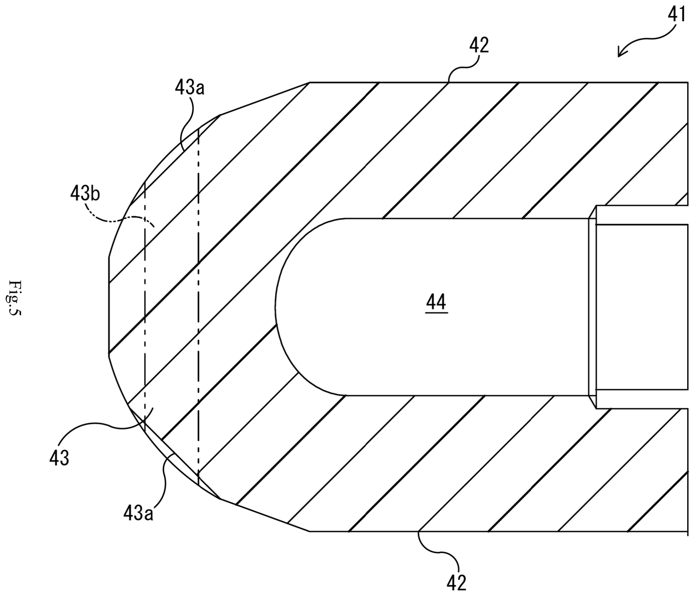

The plurality of slits 43a connect the flow paths 46 and the second valve port 12a, as illustrated in Fig. 2. More specifically, the plurality of slits 43 are positioned on a portion 43b of the seating part 43 that is seated on the second valve seat 15 (the region sandwiched by the dash-dot-dot lines in Figs. 4 and 5) Therefore, the plurality of slits 43a connect the flow paths 46 and the second valve port 12a when the second valve body 41 is seated on the second valve seat 15. When the flow paths 46 and the second valve port 12a are connected via the plurality of slits 43a, the gas flow from the second valve chamber 12 to the valve passage 13 is throttled. In the present embodiment, each of the plurality of slits 43a is formed in the shape of an oval. The plurality of slits 43a extend beyond the portion 43b of the seating part 43 that is to be seated.

The plurality of slits 43a are positioned offset in phase from the plurality of cutouts 42 as viewed to the other side in the axial direction of the second valve body 41 (that is the same as the axial direction of the valve device 1 in the present embodiment and will be hereinafter referred to simply as "the axial direction"). More specifically, each of the plurality of slits 43a is positioned offset from a corresponding one of the plurality of cutouts 42 at a predetermined angle along the perimeter with the axis L1 at the center as viewed to the other side in the axial direction. In the present embodiment, each of the four slits 43a is positioned 45 degrees offset from a corresponding one of the cutouts 42 along the perimeter with the axis L1 at the center as viewed to the other side in the axial direction.

The capturing hole 44 faces the inlet/outlet 22e, which is an opening of the inflow/outflow passage 22c. The capturing hole 44 extends parallel to the axis of the second valve body 41. In the present embodiment, the capturing hole 44 is the inner hole of the second valve body 41. The capturing hole 44 is positioned so that the opening thereof faces the inlet/outlet 22e. Therefore, when foreign matter flows into the second valve chamber 12 through the inlet/outlet 22e of the inflow/outflow passage 22c together with the gas, the foreign matter flows into the capturing hole 44, meaning that the capture hole 44 can capture the foreign matter. Note that the foreign matter to be captured is water, for example. However, the foreign matter may be a liquid other than water or may be solid matter such as contaminants and those formed by solidification of said liquid.

### <Operation of Valve Device>

In the valve device 1, when not energized, the first valve body 31 of the electromagnetic valve 3 is seated on the first valve seat 14. As a result, the first valve port 11a is closed and therefore, the flow of gas in the valve device 1 ceases. When gas at a pressure greater than the gas pressure of the first valve chamber 11 is brought to the second flow path portion 2b, the valve device 1 operates as follows. Specifically, the gas is brought from the second flow path portion 2b to the second valve chamber 12 via the inflow/outflow passage 22c. The gas brought to the second valve chamber 12 is blown out to the capturing hole 44 because the inlet/outlet 22e faces the capturing hole 44. Therefore, the foreign matter flowing together with the gas flows into the capturing hole 44 and thus, the capture hole 44 captures the foreign matter.

Furthermore, the gas flowing into the second valve chamber 12 pushes the second valve body 41 to seat the second valve body 41 on the second valve seat 15. More specifically, the gas pressure of the gas flowing into the second valve chamber 12 becomes greater than the gas pressure of the valve passage 13. Therefore, the second valve body 41 is seated on the second valve seat 15. As a result, the gas in the second valve chamber 12 passes through the flow paths 46 around the second valve body 41 and is subsequently throttled by the slits 43a before flowing to the valve passage 13. The gas that has flown to the valve passage 13 lifts up the first valve body 31 against the biasing force of the second spring member 38. Accordingly, the first valve port 11a is opened. As a result, the gas is brought from the valve passage 13 to the first flow path portion 2a via the first valve chamber 11, the communication path 22b, and the first annular space 23. Subsequently, when the pressure difference between the gas pressure of the first flow path portion 2a and the gas pressure of the valve passage 13 (that is, the pressure difference between the first flow path portion 2a and the second flow path portion 2b) reaches a predetermined value, the first valve body 31 is seated on the first valve seat 14. As a result, the first valve port 11a is closed and therefore, the flow of gas from the second flow path portion 2b to the first flow path portion 2a ceases.

Next, when the solenoid 36 is energized, an excitation force is produced and thus, the first valve body 31 moves. As a result, the first valve body 31 is unseated from the first valve seat 14. More specifically, when the solenoid 36 is energized, the plunger 34 is attracted to the stationary pole 37 by the excitation force. Accordingly, the pilot valve body 33 is lifted up against the biasing force of the second spring member 38 and therefore, the inner passage 31a is opened. As a result, the difference between the gas pressure of the first valve chamber 11 and the gas pressure of the valve passage 13 is reduced, and therefore the first valve body 31 is lifted up by the first spring member 32. Thus, the first valve body 31 disengages from the first valve seat 14 and as a result, the first valve port 11a is opened. The first flow path portion 2a and the valve passage 13 are connected via the first annular space 23, the communication path 22b, and the first valve chamber 11.

When the first flow path portion 2a and the valve passage 13 are connected and the gas pressure of the valve passage 13 becomes greater than the gas pressure of the second valve chamber 12, the second valve body 41 is pushed by the gas in the valve passage 13. By being pushed, the second valve body 41 is unseated from the second valve seat 15. As a result, the second valve port 12a is opened and therefore, the gas flows from the valve passage 13 to the second flow path portion 2b via the second valve chamber 12, the inflow/outflow passage 22c, and the second annular space 24. Thus, the gas flowing in the first flow path portion 2a can be brought to the second flow path portion 2b. Subsequently, when the valve device 1 is not energized, the attracted plunger 34 disengages from the stationary pole 37. Accordingly, the first valve body 31 is pushed by the second spring member 38 via the pilot valve body 33 and is thereby seated on the first valve seat 14. As a result, the first valve port 11a is closed and therefore, the flow of gas from the first flow path portion 2a to the second flow path portion 2b ceases. Note that at this time, in the backflow throttle valve 4, which is a springless valve, the second valve body 41 remains unseated from the second valve seat 15. When the gas is brought from the second flow path portion 2b to the second valve chamber 12 again, the second valve body 41 is seated on the second valve seat 15 as described above.

With the valve device 1 according to Embodiment 1, by positioning the backflow throttle valve 4 in the second valve port 12a, it is possible to ensure that the gas flows from the electromagnetic valve 3 to the backflow throttle valve 4 via the valve passage 13 at a sufficient flow rate. Meanwhile, it is possible to reduce the flow rate of gas flowing from the backflow throttle valve 4 to the electromagnetic valve 3 via the valve passage 13. Thus, if the gas flowing from the backflow throttle valve 4 to the electromagnetic valve 3 via the valve passage 13 contains foreign matter, it is possible to reduce the occurrence of a large amount of foreign matter reaching the electromagnetic valve 3. Liquids such as water are solidified at a low temperature; for example, in the valve device 1 according to Embodiment 1, it is possible to avoid solidification of water within the electromagnetic valve 3.

Furthermore, in the valve device 1 according to Embodiment 1, the cutouts 42 are formed on the outer peripheral surface of the second valve body 41 and thus, a portion where the second valve body 41 slides with respect to the housing 2 (that is, a sliding portion of the second valve body 41) can be set small. As a result, it is possible to impede the ingress of the foreign matter flowing together with the gas into the area between the sliding portion of the second valve body 41 and the housing 2. Note that in the present embodiment, the rounded corners 41a of the second valve body 41 are in abutment with the housing 2. The rounded corners 41a serve as the sliding portion of the second valve 41. Therefore, the sliding portion of the second valve 41 is small. As a result, it is possible to impede the ingress of foreign matter into the area between the sliding portion of the second valve body 41 and the housing 2.

Furthermore, in the valve device 1 according to Embodiment 1, the seating part 43 includes the slits 43a that connect the flow paths 46 and the second valve port 12a. Therefore, when the second valve body 41 is seated, it is possible to allow gas flow from the flow paths 46 to the second valve port 12a via the slits 43a. This means that gas can flow from the backflow throttle valve 4 to the electromagnetic valve 3 and moreover, the flow rate of flowing gas can be reduced.

Furthermore, in the valve device 1 according to Embodiment 1, each of the plurality of slits 43a is positioned offset in phase from a corresponding one of the plurality of cutouts 42 as viewed to the other side in the axial direction. Therefore, it is possible to impede the direct ingress of the foreign matter flowing together with the gas from the flow paths 46 into the slits 43a. Thus, it is possible to impede the flow of foreign matter from the backflow throttle valve 4 to the electromagnetic valve 3.

Furthermore, in the valve device 1 according to Embodiment, the second valve body 41 includes the capturing hole 44 facing the inlet/outlet 22e of the inflow/outflow passage 22c. Therefore, the foreign matter flowing together with the gas flowing from the inflow/outflow passage 22c into the second valve chamber 12 can be captured in the capturing hole 44. This makes it possible to further impede the flow of foreign matter from the backflow throttle valve 4 to the electromagnetic valve 3.

Furthermore, in the valve device 1 according to Embodiment 1, the housing 2 includes the seat element 22. By using the seat element 22 in the valve device 1, it is possible to easily position the electromagnetic valve 3 and the backflow throttle valve 4 in the valve insertion hole 21a.

Furthermore, in the valve device 1 according to Embodiment 1, the backflow throttle valve 4 and the electromagnetic valve 3 face each other with the seat element 22 interposed therebetween. Therefore, the backflow throttle valve 4 and the electromagnetic valve 3 can share the seat element 22. As a result, the number of components of the valve device 1 can be reduced.

Furthermore, in the valve device 1 according to Embodiment 1, the throttle member 27 makes it possible to reduce the flow rate of gas flowing from the backflow throttle valve 4 into the seal groove 25a through the area between the seat element body 25 and the housing body 21. Moreover, the throttle member 27 can exhaust gas from the seal groove 25a to the backflow throttle valve 4. Therefore, it is possible to impede gas accumulation within the seal groove 25a, on the other side of the sealing member 26 in the axial direction. This makes it possible to minimize the increase in the inner pressure of the seal groove 25a that is generated on the other side of the sealing member 26 in the axial direction. Therefore, it is possible to impede the movement of the sealing member 26 to the one side in the axial direction, meaning that the sealing member 26 can be protected from damage, etc.

Furthermore, in the valve device 1 according to Embodiment 1, it is possible to reduce the flow rate of gas flowing from the backflow throttle valve 4 to the electromagnetic valve 3 and thus, the occurrence of excessive gas backflow to the electromagnetic valve 3 is reduced. As a result, the leakage of gas from the seating part 43 of the electromagnetic valve 3 is reduced.

Furthermore, in the valve device 1 according to Embodiment 1, the backflow throttle valve 4 is a springless valve. Therefore, after the electromagnetic valve 3 opens the first valve port 11a and causes the gas to flow from the valve passage 13 into the second valve chamber 12, the second valve port 12a can be left open. As a result, the occurrence of chatter at the backflow throttle valve 4 can be reduced. The second valve port 12a is closed while the gas flows from the second valve chamber 12 to the valve passage 13 via the second valve port 12a. Therefore, the foreign matter flowing from the second valve chamber 12 to the valve passage 13 via the second valve port 12a together with the gas can be impeded from reaching the electromagnetic valve 3.

Furthermore, with the valve device 1 according to Embodiment 1, by positioning the backflow throttle valve 4 in the second valve port 12a, it is possible to ensure that the gas flows from the electromagnetic valve 3 to the valve passage 13 at a sufficient flow rate. Meanwhile, it is possible to reduce the flow rate of gas flowing from the backflow throttle valve 4 to the electromagnetic valve 3 via the valve passage 13. Thus, if the gas flowing from the backflow throttle valve 4 to the electromagnetic valve 3 via the valve passage 13 contains foreign matter, it is possible to reduce the occurrence of a large amount of foreign matter reaching the electromagnetic valve 3. Furthermore, the housing 2 includes the seat element 22. By using the seat element 22 in the valve device 1, it is possible to position the electromagnetic valve 3 and the backflow throttle valve 4 in the valve insertion hole 21a. Thus, the valve device 1 can be made compact.

Furthermore, in the valve device 1 according to Embodiment 1, the second valve body 41 of the backflow throttle valve 4, which is a spring less valve, can be moved according to the pressure difference between the gas pressure of the valve passage 13 and the gas pressure of the second valve chamber 12. Therefore, after the electromagnetic valve 3 opens the first valve port 11a and causes the gas to flow from the valve passage 13 into the second valve chamber 12, the second valve port 12a can be left open. As a result, the occurrence of chatter at the backflow throttle valve 4 can be reduced. When the gas tends to flow from the second valve chamber 12 to the valve passage 13 via the second valve port 12a, the second valve port 12a can be closed. Therefore, the foreign matter flowing from the second valve chamber 12 to the valve passage 13 via the second valve port 12a together with the gas can be impeded from reaching the electromagnetic valve 3.

### <Other Embodiments>

In the valve device 1 according to the present embodiment, the electromagnetic valve 3 is an electromagnetic pilot valve; however, the electromagnetic valve 3 is not necessarily limited to the above-described configuration. Specifically, the electromagnetic valve 3 may be configured such that the first valve body 31 is attracted to the stationary pole 37. Furthermore, the second spring member 38 may bias the first valve body 31 to the closed position. Moreover, the first valve of the valve device 1 is not necessarily limited to the electromagnetic valve 3 and may be other valves such as a relief valve and a check valve.

Similarly, the second valve of the valve device 1 according to Embodiment 1 does not necessarily need to be the backflow throttle valve 4 and may be a check valve or an excess flow valve. When the second valve is a check valve, the second valve body 41 includes no slits 43a. As a result, when the second valve body 41 is seated on the second valve seat 15, the flow from the second valve chamber 12 to the valve passage 13 is blocked. When the second valve is an excess flow valve, a spring member biases the second valve body 41 in a direction such that the second valve body 41 is unseated from the second valve seat 15. In the case of the excess flow valve, when the gas flows from the second valve chamber 12 to the valve passage 13 at a predetermined or higher flow rate, the gas in the second valve chamber 12 pushes the second valve body 41 against the spring member. As a result, the second valve body 41 is seated on the second valve seat 15, and the second valve port 12a is closed. Therefore, the flow rate of the gas flowing to the valve passage 13 can be limited.

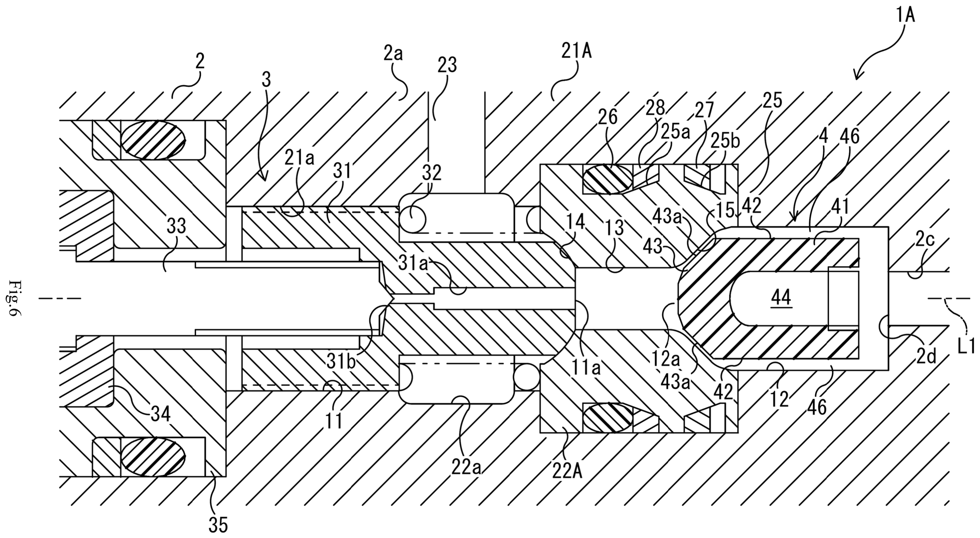

In the valve device 1 according to the present embodiment, the first valve chamber 11 and the second valve chamber 12 are formed in the seat element 22; however, the first valve chamber 11 and the second valve chamber 12 may be formed in a housing body 21A as in a valve device 1A according to another embodiment illustrated in Fig. 6. More specifically, a seat element 22A includes the valve passage 13. The seat element 22 is provided in the housing body 21A to segment the valve insertion hole 21a into the first valve chamber 11 and the second valve chamber 12. Furthermore, the inlet/outlet 22e of the second flow path portion 2b (equivalent to the inflow/outflow passage) faces the capturing hole 44. Thus, in the valve device 1A, the first valve chamber 11 and the second valve chamber 12 are formed in the housing body 21A, and the valve device 1A produces substantially the same advantageous effects as those produced by the valve device 1.

Furthermore, in the valve device 1 according to the present embodiment, the electromagnetic valve 3 and the backflow throttle valve 4 do not necessarily need to be arranged facing each other with the seat element 22 interposed therebetween. For example, the electromagnetic valve 3 and the backflow throttle valve 4 may be arranged to form the shape of the letter L in plan view or may be arranged with axes thereof offset from each other.

Furthermore, in the valve device 1 according to the present embodiment, the backflow throttle valve 4 does not necessarily need to be a springless valve, and the second valve body 41 may be biased by a spring toward the second valve seat 15.

In the valve device 1 according to the present embodiment, the cutout 42 forms a flat surface of the second valve body 41, but does not necessarily need to be a flat surface. For example, a cutout 42 in the shape of a groove may be formed on the outer peripheral surface of the second valve body 41. It is sufficient that the cutout 42 form a flow path between the outer peripheral surface of the second valve body 41 and the housing 2. The number of cutouts 42 may be three or less or may be five or more. Furthermore, the number of slits 43a may be three or less or may be four or less. The positions of the cutouts 42 and the slits 43a do not necessarily need to be offset in phase and may be in the same phase.

From the foregoing description, many modifications and other embodiments of the present disclosure would be obvious to a person having ordinary skill in the art. Therefore, the foregoing description should be interpreted only as an example and is provided for the purpose of teaching the best mode for carrying out the present disclosure to a person having ordinary skill in the art. Substantial changes in details of the structures and/or functions of the present disclosure are possible within the spirit of the present disclosure.

### Reference Signs List

- 1, 1A: valve device
- 2: housing
- 2c: second flow path portion (inflow/outflow passage)
- 2d: inlet/outlet (opening)
- 3: electromagnetic valve
- 4: backflow throttle valve
- 11: first valve chamber
- 11a: first valve port
- 12: second valve chamber
- 12a: second valve port
- 13: valve passage
- 15: second valve seat (valve seat)
- 21, 21A: housing body
- 21 a: valve insertion hole
- 22, 22A: seat element
- 22c: inflow/outflow passage
- 22e: inlet/outlet (opening)
- 25: seat element body
- 25a: seal groove
- 26: sealing member
- 27: throttle member
- 31: first valve body
- 36: solenoid
- 41: second valve body
- 42: cutout
- 43: seating part
- 43a: slit
- 43b: portion
- 44: capturing hole
- 46: flow path

## Claims

1. A valve device comprising:
a housing including a first valve chamber including a first valve port, a second valve chamber including a second valve port, a valve passage connecting the first valve port and the second valve port, and a valve seat around the second valve port;
an electromagnetic valve including a first valve body housed in the first valve chamber and configured to open and close the first valve port, and a solenoid that moves the first valve body by an electromagnetic force; and
a backflow throttle valve including a second valve body housed in the second valve chamber and configured to be seated on and unseated from the valve seat, wherein:
when pushed by gas in the valve passage, the second valve body of the backflow throttle valve is unseated from the valve seat, and when pushed by gas in the second valve chamber, the second valve body of the backflow throttle valve is seated on the valve seat to throttle gas flow from the second valve chamber to the valve passage.

2. The valve device according to claim 1, wherein:
the second valve body is slidably housed in the housing and includes one or more cutouts on an outer peripheral surface; and
each of the one or more cutouts forms a flow path between the outer peripheral surface of the second valve body and the housing.

3. The valve device according to claim 2, wherein:
the second valve body includes a seating part to be seated on the valve seat; and
the seating part includes one or more slits that connect the flow path and the second valve port.

4. The valve device according to claim 3, wherein:
the second valve body includes a plurality of cutouts each being one of the one or more cutouts and a plurality of slits each being one of the one or more slits; and
each of the plurality of slits is positioned offset in phrase from a corresponding one of the plurality of cutouts as viewed in an axial direction of the second valve body.

5. The valve device according to any one of claims 1 to 4, wherein:
the housing further includes an inflow/outflow passage that is open to the second valve chamber; and
the second valve body includes a capturing hole facing an opening of the inflow/outflow passage.

6. The valve device according to any one of claims 1 to 5, wherein:
the housing includes a housing body including a valve insertion hole and a seat element housed in the valve insertion hole;
the first valve chamber is located in at least one of the housing body or the seat element;
the second valve chamber is located in at least one of the housing body or the seat element; and
the seat element includes the valve passage.

7. The valve device according to claim 6, wherein:
the backflow throttle valve and the electromagnetic valve face each other with the seat element interposed therebetween.

8. The valve device according to claim 6 or 7, wherein:
the seat element includes:
a seat element body including the valve passage and a seal groove extending around an entire perimeter of an outer peripheral surface of the seat element body;
a sealing member disposed in the seal groove; and
a throttle member provided on an exterior of the seat element body;
in the seat element body, the electromagnetic valve is disposed on one side in an axial direction, and the backflow throttle valve is disposed on the other side in the axial direction;
the sealing member provides a seal between the seat element body and the housing body; and
the throttle member is disposed between the seat element body and the housing body, on the other side of the seal groove in the axial direction, and reduces a flow rate of gas flowing therethrough.

9. The valve device according to any one of claims 1 to 8, wherein:
the backflow throttle valve is a springless valve in which a gas pressure of the valve passage and a gas pressure of the second valve chamber act on the second valve body in opposite directions and the second valve body is configured to open and close the second valve port according to a pressure difference between the gas pressure of the valve passage and the gas pressure of the second valve chamber.

10. A valve device comprising:
a housing including a housing body including a valve insertion hole, and a seat element housed in the valve insertion hole and including a valve passage connecting a first valve port and a second valve port;
a first valve housed in the valve insertion hole and configured to open and close the first valve port by being seated on and unseated from the seat element; and
a second valve housed in the valve insertion hole and configured to open and close the second valve port by being seated on and unseated from the seat element, wherein:
the first valve is an electromagnetic valve; and
the second valve is a backflow throttle valve, a check valve, or an excess flow valve.

11. A valve device comprising:
a housing including a first valve chamber including a first valve port, a second valve chamber including a second valve port, and a valve passage connecting the first valve port and the second valve port;
an electromagnetic valve including a first valve body housed in the first valve chamber and configured to open and close the first valve port, and a solenoid that moves the first valve body by an electromagnetic force; and
a springless valve including a second valve body movably housed in the second valve chamber and configured to open and close the second valve port, wherein:
the second valve body receives a gas pressure of the valve passage and a gas pressure of the second valve chamber in opposite directions and is configured to open and close the second valve port according to a pressure difference between the gas pressure of the valve passage and the gas pressure of the second valve chamber.
